# EUROPÄISCHE PATENTSCHRIFT

(11) **EP 0 927 309 B1**
(45) Veröffentlichungstag und Bekanntmachung des Hinweises auf die Patenterteilung: **08.01.2003**
(21) Anmeldenummer: 98943793.4
(22) Anmeldetag: 28.07.1998
(51) Int. Cl.: F16B 25/00

(54) **SCHRAUBE MIT SELBSTFURCHENDEM GEWINDE**
SELF TAPPING SCREW
VIS AVEC FILETAGE A RAINURAGE AUTOMATIQUE

(30) Priorität: 29.07.1997 DE 19732652; 29.07.1997 DE 19732636
(43) Veröffentlichungstag der Anmeldung: 07.07.1999
(73) Patentinhaber: EJOT VERBINDUNGSTECHNIK GmbH & Co. KG, D-57334 Bad Laasphe (DE)
(72) Erfinder: GROSSBERNDT, Hermann, D-57334 Bad Laasphe (DE); KÖNIG, Gottfried, D-57334 Bad Laasphe (DE)
(74) Vertreter: Bardehle, Heinz, Dipl.-Ing.
(86) Internationale Anmeldenummer: EP9804719
(87) Internationale Veröffentlichungsnummer: WO99006715

(56) Entgegenhaltungen:
- EP-A- 0 104 552
- EP-A- 0 133 773
- DE-A- 3 114 138
- DE-A- 4 439 535
- GB-A- 1 120 991
- US-A- 3 878 759
- US-A- 4 161 132
- US-A- 4 536 117
- US-A- 5 061 135

## Beschreibung

Die Erfindung bezieht sich auf eine durch Kaltwalzen geformte Schraube zum Eindrehen in Kunststoff mit selbstfurchendem Gewinde, deren Gewindegänge im Querschnitt etwa messerklingenartig mit einem äußeren Flankenwinkel von 30° gestaltet sind.

Derartige Schrauben werden in großem Umfang verwendet. Als Beispiel sei auf die Schraube gemäß der DE-PS 27 54 870 verwiesen. Beim Eindrehen einer derartigen Schraube in Kunststoff wird dieser von den in den Kunststoff eindringenden Gewindegängen verdrängt, wofür der Gewindequerschnitt einen ausreichenden Freiraum zur Verfügung stellen muß, und zwar einen Abstand zwischen einer die Schrauben aufnehmenden Bohrung und dem Kerndurchmesser der Schrauben. Bei der bekannten Schraube geschieht dies zusätzlich dadurch, daß der Gewindegrund eine Einschnürung aufweist. Dies bedeutet, daß das von dem Gewinde verdrängte Kunststoffmaterial den Weg von dem Bereich des in den Kunststoff eingedrungenen Gewindeganges in den Gewindegrund zurücklegen muß. Das verdrängte Kunststoffmaterial verliert dabei die direkte, enge Verbindung mit dem unverdrängten Kunststoffmaterial, womit seine Fähigkeit, zur Auszugskraft beizutragen, vermindert wird. Unter Auszugskraft ist diejenige Kraft zu verstehen, die zum Ausreißen der eingedrehten Schraube erforderlich ist.

Es ist weiterhin in der EP-PS 133 773 eine Schraube mit einem äußeren Flankenwinkel von 30° zum Eindrehen in Kunststoff mit selbstfurchendem Gewinde beschrieben, bei der zur Erhöhung des Lösemomentes die Gewindeflanken in deren Axialschnitt auf der einen Seite geradlinig und auf der anderen Seite mit einem Knick nach außen versehen sind. Mit dieser Gewindegestaltung kann beim Verdrängen des Kunststoffes dem Verbindungsverlust zwischen verdrängtem und unverdrängtem Kunststoff nicht entgegengewirkt werden. Weiter zeigt die EP-PS 476 831 ebenfalls eine unsymmetrische Gestaltung des Gewindes einer Schraube zum Eindrehen in Kunststoff mit selbstfurchendem Gewinde, wobei diese Gestaltung darauf hinausläuft, die Gewindegänge in deren Axialschnitt auf der einen Seite geradlinig und auf der anderen Seite in einem Bogen in den Gewindegrund einlaufen zu lassen, wobei also im Bereich des Bogens sich der Flankenwinkel des Gewindes ständig vergrößert. Hierdurch soll die Verdrängung des Kunststoffmaterials im Sinne der Erhöhung der Auszugskraft verbessert werden.

Ergänzend sei auf das DE-GBM 79 25 469 verwiesen, in dem ein mit einem Gewinde versehener Schweißstift offenbart ist, bei dem das Gewinde dazu dient, ein mit einer Öffnung versehenes Werkstück auf den Schweißstift aufzudrücken und das Werkstück dadurch festzuhalten, daß scharfkantig ausgebildete Gewindespitzen sich in das Material des Werkstückes eindrücken und dieses gegen eine Auszugskraft festzuhalten. Die Scharfkantigkeit des Gewindes wird bei dem bekannten Schweißstift dadurch herbeigeführt, daß seitlich an die Gewindespitze eine umlaufende Phase angedrückt ist, die scharfkantig in die eine Gewindeflanke übergeht. Dabei ergibt sich zwangsläufig an der Gewindespitze ein besonders großer Flankenwinkel von etwa 75°. Aufgrund dieser Gestaltung ist das an dem bekannten Schweißstift vorgesehene Gewinde für eine Schraube zum Eindrehen in Kunststoff mit selbstfurchendem Gewinde ungeeignet, da Schrauben zum Eindrehen in Kunststoff nur dann eine ausreichende Eindringtiefe der Gewindegänge gewährleisten, wenn der Querschnitt der Gewindegänge etwa messerklingenartig ausgebildet ist (siehe oben genannte DE-PS 27 54 870).

Eine der Gestaltung des DE-GBM 79 25 469 ähnliche Gewindeform für eine Holzschraube zeigt die europäische Patentanmeldung 102 605, allerdings ohne scharfkantige Gewindespitze, die somit keinerlei Eigenschaften aufweist, die sie für das Eindrehen in Kunststoff geeignet machen könnte.

Der Erfindung liegt die Aufgabe zugrunde, das selbstfurchende Gewinde einer durch Kaltwalzen geformten Schraube hinsichtlich des Axialschnitts durch die Gewindegänge so zu gestalten, daß das beim Eindrehen der Schraube in Kunststoff verdrängte Kunststoffmaterial in besonders günstiger Weise abfließen kann.

Erfindungsgemäß geschieht dies dadurch, daß eine Flankenfläche der Gewindegänge etwa im mittleren Drittel einen Knick nach innen zu aufweist und einen an den äusseren Flankenwinkel ( α ) direkt anschliessenden inneren Flankenwinkel (zwischen dem Knick und dem Gewindegrund) bildet, wobei der innere Flankenwinkel im wesentlichen gleich oder größer ist als 1/3 des äußeren Flankenwinkels.

Aufgrund des nach innen zu weisenden Knicks der Flankenfläche der Gewindegänge wird das von den Gewindegängen verdrängte Kunststoffmaterial in den Bereich des inneren Flankenwinkels gedrängt, wobei dieser Bereich wegen des nach innen zu weisenden Knicks und des dadurch relativ weit nach außen reichenden Freiraums sich direkt an das verdrängte Kunststoffmaterial anschließt, das sich dabei von der Bohrungswandung ohne Materialstau vorwölbt, so daß das verdrängte Kunststoffmaterial wegen des kurzen Verdrängungsweges nur minimal erwärmt wird und in direkter enger Verbindung mit dem unverdrängten und somit unbeeinträchtigten Kunststoffmaterial verbleibt. Damit kann dieses, in seinen Eigenschaften weitgehend erhaltene, verdrängte Kunststoffmaterial im Bereich des inneren Flankenwinkels der Auszugskraft entgegenwirken und trägt somit wesentlich zu der Belastbarkeit der betreffenden Schraubverbindung bei.

Es ist möglich, den Knick jeweils nur auf einer Flankenfläche eines Gewindeganges vorzusehen, wobei also über das gesamte Gewinde der Knick durchgehend einseitig angeordnet ist. Man kann aber auch den Knick jeweils auf beiden Flankenhälften eines Gewindeganges vorsehen. Die Anordnung des Knicks auf nur einer Flankenfläche hängt von dem Kunststoffmaterial ab, in das die betreffende Schraube einzudrehen ist. Handelt es sich um wärmeempfindliches Kunststoffmaterial, so ordnet man den Knick vorteilhaft auf derjenigen Flankenfläche an, die dem Schraubenkopf abgewandt ist (Rückflanke). In diesem Falle ergibt sich eine Verformung von Kunststoffmaterial im wesentlichen auf der Seite der Rückflanke, wo das verformte Kunststoffmaterial in den durch den Knick gegebenen Freiraum einfließt, so daß auf der dem Schraubenkopf zugewandten Flankenfläche (Lastflanke) weitgehend unerwärmtes Kunststoffmaterial für die Aufnahme der auf die Schraube wirkenden Kräfte zur Verfügung steht. Handelt es sich dagegen um temperaturbeständiges Kunststoffmaterial (wie sich dies insbesondere aufgrund einer Glasfaserverstärkung ergibt), so ordnet man den Knick vorteilhaft auf der Lastflanke an, da sich in diesem Falle vor der Lastflanke in erheblichem Umfang beim Eindrehen der Schraube verdrängtes Kunststoffmaterial anhäuft, das dann aufgrund seiner Menge und gegebenenfalls wegen der Verstärkung durch seinen Füllstoff der von der Schraube ausgehenden Belastung besonders gut standhält.

Der äußere Flankenwinkel kann die Gewindegänge in deren Axialschnitt symmetrisch oder unsymmetrisch begrenzen. Die symmetrische Begrenzung begünstigt die Herstellung der für das Kaltwalzen notwendigen Walzbacken, die unsymmetrische Begrenzung liefert bei bestimmten Kunststoffmaterialien erhöhte Auszugskräfte.

Die Gestaltung der Flankenflächen im Bereich des inneren Flankenwinkels kann so gewählt werden, daß die Flankenflächen im Axialschnitt vom Knick ab geradlinig oder konkav gewölbt verlaufen. Die Wahl dieser Gestaltung hängt von dem Kunststoff ab, in den die Schraube eingedreht werden soll.

Auch bzgl. der Gestaltung des inneren Flankenwinkels der Gewindegänge ist es möglich, durch diesen die Gewindegänge in deren Axialschnitt symmetrisch oder unsymmetrisch zu begrenzen. Die Wahl dieser Begrenzung hängt ebenfalls im wesentlichen von dem Kunststoff ab, in den die Schraube einzudrehen ist.

Um die Stabilität der Gewindegänge zu erhöhen und den Materialfluß bei der Herstellung der Schraube durch Kaltwalzen zu verbessern, gestaltet man die Schraube zweckmäßig so, daß die Flankenflächen im Bereich des Gewindefußes unter Vergrößerung des inneren Flankenwinkels in den Gewindegrund als Verbreiterung des Gewindefußes übergehen. Die Verbreiterung bildet dabei einen gegenüber dem äußeren Flankenwinkel im Mittel größeren Flankenwinkel. Dabei kann die Verbreiterung im Axialschnitt geradlinig verlaufen, es ist aber auch möglich, die Verbreiterung im Axialschnitt konkav gewölbt verlaufen zu lassen.

Zweckmäßig werden die Gestaltung der Schraube und das Kunststoffmaterial sowie der Durchmesser der die Schraube aufnehmenden Bohrung aufeinander abgestimmt, wozu eine Reihe von Formgebungen, wie vorstehend beispielsweise beschrieben, verwendet werden können. Dabei ist darauf zu achten, daß bei eingedrehter Schraube der Knick in den Flankenflächen von Kunststoffmaterial umgeben ist. Zweckmäßig liegt der Knick bei einem Durchmesser, der etwa gleich oder größer als der Bohrungsdurchmesser ist. Hierfür hat sich eine Lage des Knicks etwa in der Mitte der Flankenflächen als günstig ergeben. Dabei kann, auch zur Erleichterung der Schraubenherstellung, der innere Flankenwinkel so gewählt werden, daß dieser gleich oder größer als die Hälfte des äußeren Flankenwinkels ist, sofern der hierdurch gegebene Freiraum ausreichend groß für das Einfließen von verdrängtem Kunststoff ist.

Eine weitere bekannte Schraube, die in großem Umfang verwendet wird, ist in der DE-PS-31 17 624 offenbart. Die bekannte Schraube besitzt ein konisch in einer Spitze auslaufendes Gewinde, wodurch das Eindrehen in ein Werkstück erleichtert werden soll. Beim Eindrehen ergibt sich nämlich ein Übergang von dem geringen Gewindedurchmesser zu dem vollen Gewindedurchmesser, wodurch die Schraube zunächst mit geringem Kraftaufwand eingedreht werden kann, wonach dann beim weiteren Eindrehen die volle Erweiterung des gefurchten Gewindes mit relativ geringem Drehmoment ermöglicht werden soll. Nachteilig ist bei dieser Schraubengestaltung, daß bei der Aufweitung des Gewindes längs des konischen Bereichs des Gewindes ein erheblicher Radialdruck auf das Werkstück ausgeübt wird, der nicht immer von dem betreffenden Werkstoff ohne weiteres aufgefangen werden kann. Es sind daher auch andere Gewindeformen bekannt geworden, die darin bestehen, das Gewindeende mit abnehmender Höhe des Gewindeganges auslaufen zu lassen, wobei der Gewindescheitel schließlich den Außendurchmesser des Schaftes, der dem Gewindegrund entspricht, erreicht. Eine derartige Gestaltung ist in der DE-PS 40 03 374 veröffentlicht. Eine weitere Gestaltung einer Schraube mit selbstfurchendem Gewinde besteht gemäß der GB-PS 976 849 darin, daß in den Bereich des Gewindeendes mit gegenüber dem tragenden Gewindebereich reduziertem Außendurchmesser Axialnuten eingearbeitet sind, die von dem Gewinde scharfkantig abgesetzte Zähne wie bei einem Gewindebohrer stehen lassen. Aufgrund dieser Gestaltung der Schraube ist diese in der Lage, unter Spanbildung sich selbst ein Gewinde mit reduziertem Außendurchmesser zu schneiden, das dann von dem tragenden Gewindebereich endgültig aufgeweitet wird.

Um mit der vorstehend beschriebenen Schraube den Vorgang des Furchens des Gewindes unter Vermeidung von Spanbildung zu erleichtern und das Gewinde in das Material des betreffenden Werkstücks so einzuformen, daß das Material von dem Gewinde der Schraube gewissermaßen zerteilt und zur Erzeugung einer Gewindefurche kontrolliert weggedrückt wird, gestaltet man das Gewindeende zweckmäßig so, daß es durch eine seinen Gewindegang abschneidende und schräg zum Querschnitt der Schraube gerichtete Endfläche mit einer Schneidkante und mit einer Grundlinie gebildet ist, die die zwischen der einen Gewindeflanke und dem Mantel des Schaftes bestehende Gewindefußkante fortsetzt, wobei die Grundlinie in einem von 90° erheblich abweichenden Winkel (δ) zur Steigungsrichtung (Steigungswinkel Y) des Gewindes verläuft und die Schneidkante in den Gewindescheitel übergeht.

Beim Einführen des freien Schaftendes des Gewindes in die Bohrung eines Werkstücks drückt sich das führende Ende des Gewindeganges mit seiner Endfläche in das Material des Werkstücks, wobei die Endfläche aufgrund des von der Grundlinie eingehaltenen Winkels β und des hierdurch gegebenen Abknickens der Schneidkante gegenüber dem Gewindescheitel das Material des Werkstücks aufschneidet, und zwar mit der in den Gewindescheitel übergehenden Schneidkante. Infolgedesssen kommt es zu einer Verdrängung des Materials, das dabei im wesentlichen nur auf der Seite der Endfläche seitlich weggedrückt wird, d.h. nur auf der Seite der einen Gewindeflanke, während auf der Seite der anderen Gewindeflanke eine solche Verdrängung praktisch nicht stattfindet. Mit dem Einschneiden des Gewindeganges erhält dessen an die Endfläche anschließender Bereich den notwendigen Freiraum für das weitere Eindrehen des Gewindes, wobei das Material des Werkstücks sich satt an die der Endfläche gegenüberliegende Flanke des Gewindeganges drückt. Je nach Anwendungsfall wirkt sich dies günstig auf die Ausreißkräfte aus. Dies geht im wesentlichen auch darauf zurück, daß durch das Aufteilen des Materials des Werkstücks das Material auf der Seite einer Gewindeflanke wegen dort verhinderter Materialverdrängung in seiner Struktur und damit inneren Festigkeit praktisch vollständig erhalten bleibt. Die Endfläche wirkt dabei also mit ihrer Schneidkante wie eine Schneide.

Die Endfläche kann man vorteilhaft im wesentlichen als Dreieck gestalten, dessen zwischen seinen Basispunkten verlaufende Basis von der Grundlinie gebildet ist und dessen Scheitelpunkt mit dem Gewindescheitel zusammenfällt.

Die als Dreieck gestaltete Endfläche besitzt, wie oben dargelegt, eine Schräglage zum Querschnitt der Schraube. Diese Schräglage kann man unterschiedlich wählen, nämlich entweder so, daß der Scheitelpunkt des Dreiecks gegenüber der Grundlinie in Eindrehrichtung der Schraube nacheilt oder voreilt. In dem ersten Falle ergibt sich eine größere Gestaltungsfreiheit hinsichtlich der Endfläche, da die sich dabei gewissermaßen auf der Außenseite des letzten Gewindeganges erstreckt. Im Falle des Voreilens des Scheitelpunktes bildet die Endfläche gewissermaßen eine Art Hinterschneidung des Endes des Gewindes, die nicht beliebig tief gewählt werden kann. Diese Endfläche wird zweckmäßig eben gestaltet. Es ist aber auch möglich, die Endfläche gewölbt, und zwar konvex oder konkav zu gestalten, wenn sich ergibt, daß sich hierdurch ein günstigeres Wegdrücken des Materials erzeugen läßt. dabei kann die Wölbung auch ballig verlaufen.

Eine weiterhin mögliche Gestaltung der Endfläche besteht darin, diese in wendelartiger Gestaltung von der einen Gewindeflanke ausgehen zu lassen, und zwar derart, daß die Endfläche dann flach in den Mantel des Schaftes verläuft.

Um die Herstellung der Schraube zu erleichtern, wird der Endfläche zweckmäßig eine beträchtliche Länge gegeben, insbesondere wird die Endfläche über mindestens 1/4 eines Gewindeganges erstreckt. In diesem Falle ergibt sich auch eine entsprechend lange Schneidkante, wodurch das Aufschneiden des Materials erleichtert wird.

Für die Schräglage (Winkel δ) der Endfläche in bezug auf die Steigungsrichtung des Gewindes gibt es grundsätzlich zwei Möglichkeiten. Einerseits kann man den Winkel δ so wählen, daß er wesentlich kleiner als 90° ist (kleiner als 75°). In diesem Falle wird von der Endfläche ein in Richtung zum Schraubenende hin gelenkter Druck auf das Material des Werkstücks ausgeübt, das heißt, es findet eine Zusammendrängung des Materials auf der sogenannten Rückflanke statt, die der Lastflanke gegenüber liegt. Die Lastflanke des Gewindes ist diejenige Flanke, die im Falle der Einwirkung von Ausreißkräften auf die Schraube diese Kräfte auffängt. Diese Ausreißkräfte verlaufen axial vom Schraubenende zum Schraubenkopf und versuchen, die Schraube in dieser Richtung aus dem Werkstück auszureißen. Die Anhäufung von verdrängtem Material auf der Rückflanke, die gleichbedeutend damit ist, daß das Material des Werkstücks auf der Seite der Lastflanke praktisch unbeeinträchtigt durch das Eindrehen der Schraube bleibt, bietet insbesondere bei Eindrehen in Kunststoff den Ausreißkräften gegenüber mehr Widerstand als verformtes Material auf der Seite der Lastflanke, so daß sich bei dieser Ausrichtung der Endfläche, wie Versuche gezeigt haben, größere Ausreißkräfte ergeben als bei der umgekehrten Ausrichtung der Endfläche. Wird andererseits der Winkel β so gewählt, daß er wesentlich größer als 90° ist (größer als 105°), so drückt die Endfläche das auf sie auftreffende Material in Richtung vom Schraubenende weg, das heißt, es findet eine Materialanhäufung an der Lastflanke statt.

Für die Gestaltung der Endfläche stehen verschiedene Herstellungsverfahren zur Verfügung, insbesondere spanlose oder spanabhebende Verformung.

In den Figuren sind Ausführungsbeispiele der Erfindung dargestellt. Es zeigen:
- **Fig.1**: eine Schraube im Schnitt,
- **Fig. 2-10**: vergrößerte Querschnitte von besonders gestalteten Gewindegängen, und zwar

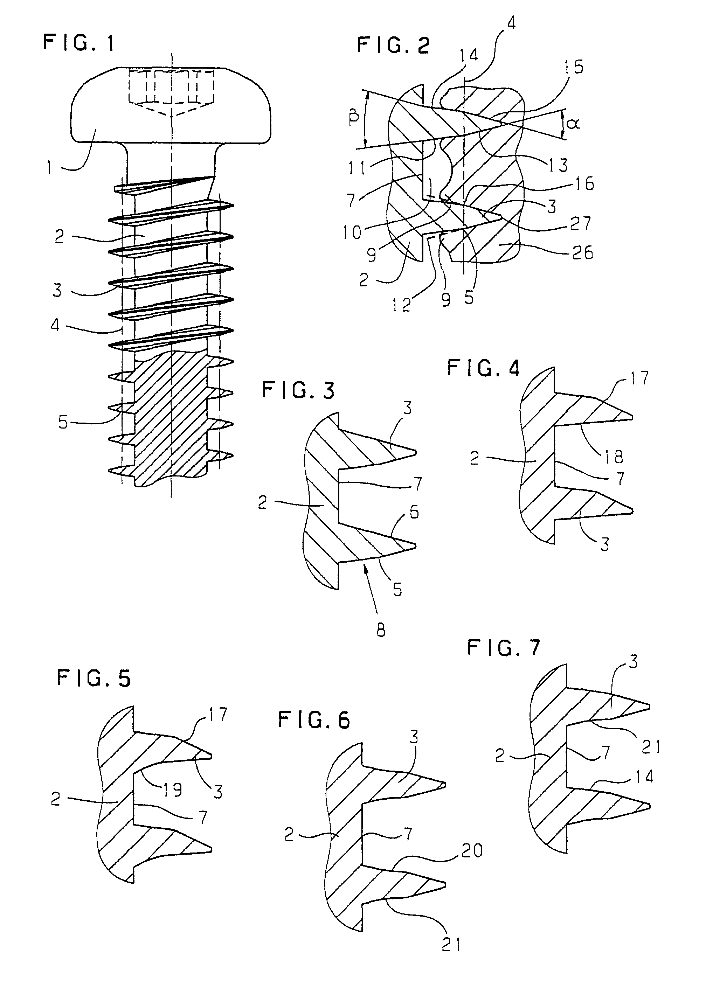

- **Fig. 2**: Gewindegänge, bei denen beide Flankenflächen eines Gewindeganges einen Knick enthalten, mit aufnehmendem Kunststoffmaterial,
- **Fig. 3**: Gewindegänge mit einem Knick auf nur einer Flankenfläche,
- **Fig. 4**: Gewindegänge mit einem Knick auf nur einer Flankenfläche und unsymmetrischem äußeren Flankenwinkel,
- **Fig. 5**: eine Abwandlung der Gestaltung gemäß Fig. 4 mit unsymmetrisch gestaltetem inneren Flankenwinkel,
- **Fig. 6**: Gewindegänge mit im Axialschnitt konkav gewölbt verlaufenden symmetrischen Flankenflächen im Bereich des inneren Flankenwinkels,
- **Fig. 7**: Gewindegänge mit unsymmetrisch verlaufenden Flankenflächen im Bereich des inneren Flankenwinkels,

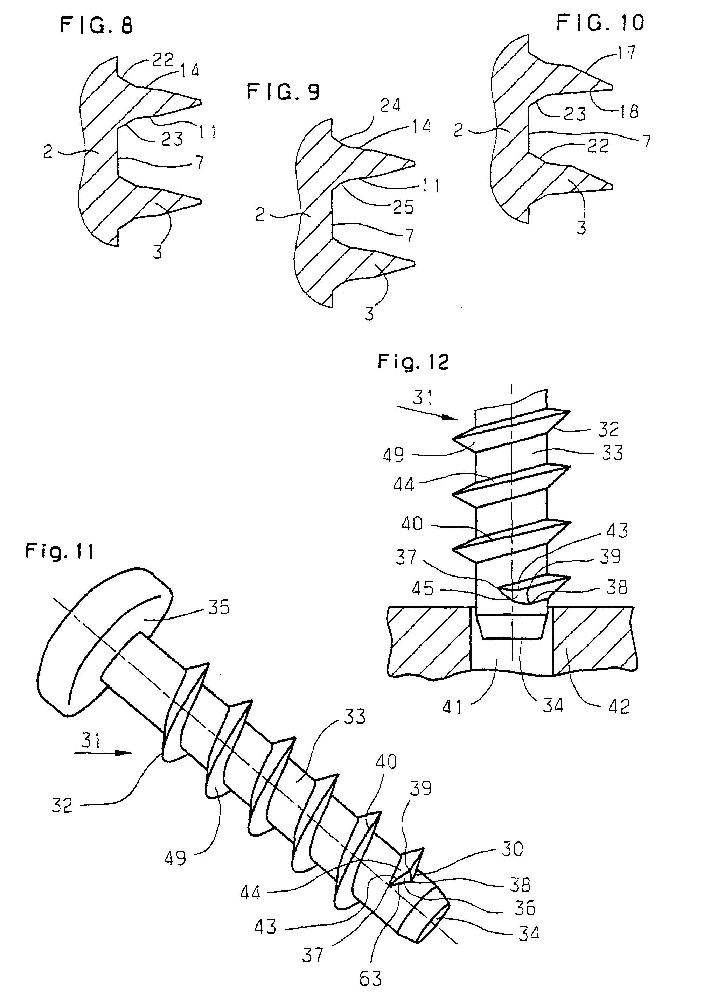

- **Fig. 8**: Gewindegänge mit einer Verbreiterung des inneren Flankenwinkels im Bereich des Gewindefußes,
- **Fig. 9**: eine Abwandlung gegenüber der Anordnung gemäß Fig. 8 mit konkaver Verbreiterung,
- **Fig. 10**: Gewindegänge mit einer Verbreiterung der Flankenflächen im Bereich des Gewindefußes im Zusammenhang mit einem unsymmetrischen äußeren Flankenwinkel.
- **Fig. 11**: eine Schraube in perspektivischer Sicht, bei der das freie Schaftende eine Führung für das Eindrehen der Schraube bildet mit ebener Endfläche;
- **Fig. 12**: die Schraube ebenfalls in perspektivischer Sicht mit konvex gewölbter Endfläche;

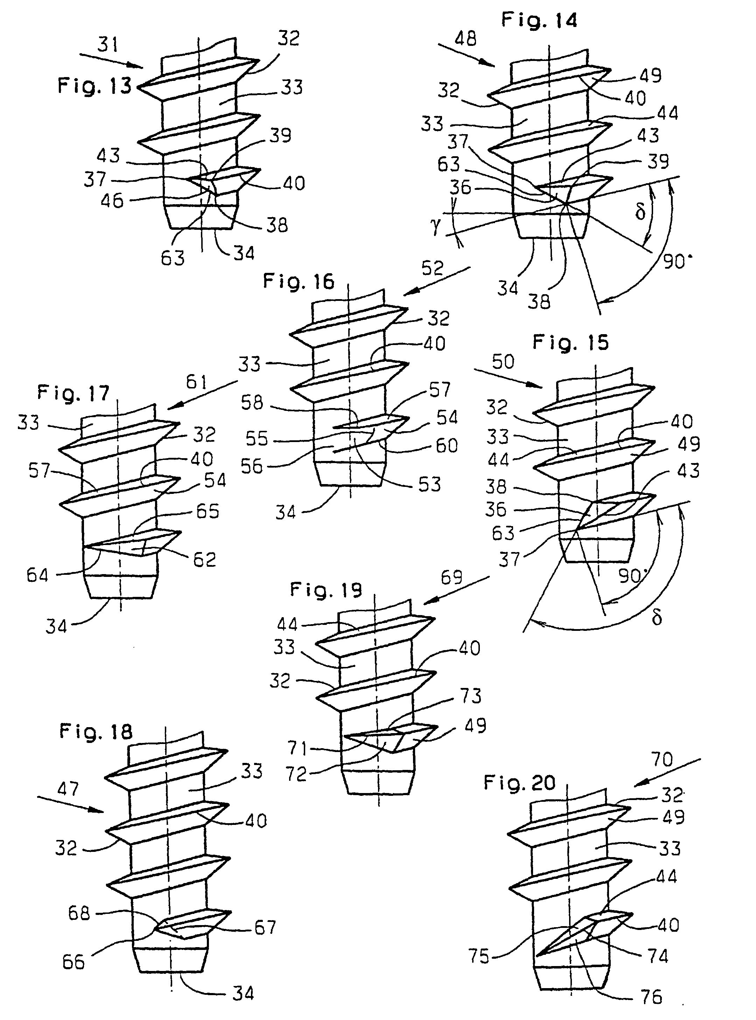

- **Fig. 13**: die gleiche Schraube mit konkav gewölbter Endfläche;
- **Fig. 14**: die Schraube mit geneigt zur Steigungsrichtung verlaufender Grundlinie, wodurch die Endfläche so gerichtet ist, daß sie beim Eindrehen das Material in Richtung zum Schraubenende hin verdrängt;
- **Fig. 15**: die gleiche Schraube, allerdings mit umgekehrt gerichteter Endfläche, die beim Eindrehen der Schraube das Material in Richtung vom Schraubenende weg verdrängt;
- **Fig. 16**: die Schraube mit gewundener Endfläche;
- **Fig. 17**: die Schraube mit relativ langer Endfläche;
- **Fig. 18**: die Schraube mit voreilendem Scheitelpunkt.
- **Fig. 19**: die Schraube mit abgebogener Endfläche
- **Fig. 20**: eine Variante der Schraube gemäß Figur 19.

In der Fig. 1 ist eine durch Kaltwalzen geformte Schraube mit dem Schraubenkopf 1 und dem Gewindeschaft 2 dargestellt, der die Gewindegänge 3 aufweist. Bezüglich des Querschnitts der Gewindegänge 3 wird auf die Erläuterung zu Fig. 2 verwiesen. In der Fig. 1 ist noch durch die strichpunktierten Linien 4 die innere Wandung einer Bohrung in einem Kunststoffteil angedeutet. Aus der Lage der strichpunktierten Linien 4 ergibt sich, daß die Gewindegänge 3 mehr als 1/3 ihrer Höhe in das Material eines nicht dargestellten Kunststoffteils eindringen. Dabei kreuzt die Linie 4 etwa die Stelle des Knicks 5 (siehe Fig. 2) in der Flankenfläche der Gewindegänge 3. Es sei jedoch daraufhingewiesen, daß die Lage der die Wandung einer Bohrung darstellenden Linie 4 auch anders gewählt werden kann, was von dem betreffenden Kunststoffmaterial abhängt, in das die Schraube einzudrehen ist.

In der Figur 2 sind Gewindegänge 3 dargestellt, die im Axialschnitt symmetrisch ausgestaltet sind, was sich daraus ergibt, daß sowohl auf der Flankenfläche 14/15 als auch auf der Flankenfläche 11/13 ein Knick vorgesehen ist, nämlich der Knick 16 und der Knick 5. Der Knick 5 wie auch der Knick 16, bilden die Grenze zwischen dem äußeren Flankenwinkel α (zwischen dem Knick 5 bzw. 16 und der Gewindespitze 27) und dem inneren Flankenwinkel β (zwischen dem Knick 5 bzw. 16 und dem Gewindegrund 7). Sowohl der äußere Flankenwinkel α als auch der innere Flankenwinkel β begrenzen die Gewindegänge 3 symmetrisch. Aus der Figur 2 geht weiterhin hervor, wie die Gewindegänge 3 in das Kunststoffmaterial 26 eindringen, das zu irgendeinem Bauteil gehört. Aufgrund dieses Eindringens der Gewindegänge 3 bilden sich die Wülste 9 neben den Gewindeflanken 14/15 und 11/13 aus. Das Kunststoffmaterial 26 wird dabei verdrängt in Richtung auf den Gewindegrund 7, wobei sich aufgrund der Schlankheit der Gewindegänge 3 nur eine minimale Verdrängung des Kunststoffmaterials 26 ergibt. Das Abknicken der Gewindeflanken 14/15 und 11/13 etwa im Bereich der Linie 4 führt zu einem zusätzlichen, beiderseitigen Freiraum, der durch die gestrichelte Linie 12 deutlich gemacht ist. Die gestrichelte Linie 12 bildet die gedachte Fortsetzung der Flankenflächen 13 bzw. 15 im Bereich des inneren Flankenwinkels β. Der zwischen dem Gewindegrund 7 und den Wülsten 9 vorhandene Freiraum 10 wird durch das Abknicken der Flankenflächen 13 bzw. 15, d.h. den Übergang in den kleineren Flankenwinkel β, entsprechend vergrößert.

In der Figur 3 ist eine gegenüber der Gestaltung nach Figur 2 abgewandelte Formgebung der Gewindegänge 3 dargestellt. Gemäß Figur 3 sind die Gewindegänge 3 im Axialschnitt unsymmetrisch gestaltet, was sich daraus ergibt, daß die Flankenfläche 6 durchgehend bis zum Gewindegrund 7 gradlinig verläuft, während die andere Flankenfläche 8 den Knick 5 aufweist.

Figur 4 zeigt eine weitere Abwandlung der Darstellung gemäß Figur 3. Bei der Figur 4 handelt es sich um Gewindegänge 3, bei denen die eine Flankenfläche 18 geradlinig und die andere Flankenfläche 17 mit einem Knick verläuft, wobei sich im Unterschied zu Figur 3 im Bereich des äußeren Flankenwinkels α Unsymmetrie ergibt.

In Figur 5 ist eine Abwandlung gegenüber der Gestaltung gemäß Figur 4 gezeigt. Die Gewindegänge 3 gemäß Figur 5 sind nämlich einseitig im Bereich des inneren Flankenwinkels β mit einer konkaven Wölbung 19 versehen. Abgesehen davon stimmen die Gewindegänge 3 gemäß Figur 5 mit denjenigen gemäß Figur 4 überein.

Das Gewinde gemäß Figur 6 ist ähnlich demjenigen gemäß Figur 2. Es weist nämlich einen symmetrischen äußeren Flankenwinkel α und im Bereich des inneren Flankenwinkels β konkav verlaufende Wölbungen 20 und 21 auf.

Figur 7 zeigt eine Abwandlung der Darstellung gemäß Figur 6, wobei die Gewindegänge 3 im Bereich des inneren Flankenwinkels β mit nur einer konkav verlaufenden Wölbung 21 versehen sind. Auf der gegenüberliegenden Seite der Gewindegänge 3 weisen diese eine geradlinig verlaufende Flankenfläche 14 im Bereich des inneren Flankenwinkels β auf, d.h. die Gestaltung nach Figur 7 entspricht insoweit der Gestaltung gemäß Figur 2.

Figur 8 zeigt eine Abwandlung der Gestaltung gemäß Figur 2. Die Schraube gemäß Figur 8 weist im Bereich des Gewindefußes die Verbreiterungen 22 und 23 auf, die hier jeweils geradlinig verlaufen. Die Verbreiterungen 22 und 23 kann man auch konkav gewölbt ausbilden. Dies ist in Figur 9 gezeigt, in der eine Schraube mit den Gewindegängen 3 dargestellt ist, bei denen der Übergang in den Gewindefuß auf beiden Seiten des Gewindeganges 3 in konkaven Wölbungen 24 und 25 verläuft.

Figur 10 zeigt eine Gestaltung ähnlich derjenigen gemäß Figur 4 mit asymmetrischem äußeren Flankenwinkel α, wobei die Übergänge in den Flankenfuß jeweils als geradlinig verlaufende Verbreiterung 22 und 23 ausgebildet sind.

Es sei noch darauf hingewiesen, daß die Unsymmetrie im Bereich des äußeren Flankenwinkels auch im Bereich des inneren Flankenwinkels, wie oben bereits angegeben, gegeben sein kann und sich dort gegebenenfalls auf im Bereich des Gewindefußes vorgesehene Verbreiterungen beziehen kann.

Für weiche Kunststoffe eignet sich eine erfindungsgemäße Schraube besonders gut, bei der innerhalb des Variationsspielraumes des Flankenwinkels von ca. 30° ein Wert gewählt wird, der zu besonders spitzen Gewindegängen, nämlich mit einem Flankenwinkel von ca. 25°, führt.

Figur 11 zeigt eine durch Kaltwalzen geformte Schraube 31 mit dem selbstfurchenden Gewinde 32, das sich über den Schaft 33 des Gewindes erstreckt und vor dem Ende 34 des Schaftes 33 endet. An der dem Ende 34 der Schraube 31 gegenüberliegenden Seite besitzt die Schraube 31 den Schraubenkopf 35.

Das Gewinde 32 wird hier durch einen einzigen durchgehenden Gewindegang gebildet, der im Bereich des Endes 34 des Schaftes 33 endet. Dieses Ende des Gewindes 32 wird durch die schräg zur Steigungsrichtung des Gewindes 32 verlaufende Endfläche 36 gebildet (siehe Fig. 14), die im wesentlichen dreieckförmige Gestalt besitzt. Die Endfläche 36 erstreckt sich zwischen den Basispunkten 37 und 38 (Grundlinie 63) auf den Mantel des Schaftes 33 und dem Scheitelpunkt 39, der mit dem Gewindescheitel 40 zusammenfällt. Die Anwendung der Endfläche 36 ist auch bei mehrgängigen Gewinden möglich.

Beim Eindrehen der Schraube 31 in eine Bohrung 41 eines Werkstücks 42 (siehe hierzu Figur 12) trifft die Endfläche 36 (bzw. 45 in Fig. 12) auf das Material des Werkstücks 42 und drückt sich in dieses ein, wozu das Material eine entsprechende Nachgiebigkeit besitzen muß. Es kann sich dabei z.B. um Kunststoff, relativ weiches Metall oder dergleichen handeln. Die Endfläche 36 trennt dabei mit ihrer zwischen den Punkten 37 und 39 verlaufenden Schneidkante 43 das Material des Werkstücks auf, das dabei auf Grund der hier gegebenen Schräglage der Endfläche 36 auf die Seite der Rückflanke 49 verdrängt wird, während sich das unverformte Material an die dem Schraubenkopf 35 zugewandte Lastflanke 44 des Gewindes 32 anlegt. Auf diese Weise furcht das mit der Endfläche 36 versehene Ende des Gewindes 32 in das Werkstück ein Muttergewinde, in das dann die der Endfläche 36 folgenden Teile des Gewindes 32 hineingleiten.

Die Endfläche 36 ist beim Ausführungsbeispiel gemäß Figur 11 als ebene Fläche ausgebildet, sie kann auch eine konvexe Wölbung (Endfläche 45 in Figur 12) oder konkave Wölbung (Endfläche 46 in Figur 13) aufweisen.

In den Figuren 14 und 15 sind gegensätzliche Wirkungen der Schraube erläutert.

In Figur 14 ist der Steigungswinkel γ des Gewindes eingezeichnet. Die Endfläche 36 ist hier so gelegt, daß die Verbindungslinie der Basispunkte 37 und 38 (Grundlinie 63) einen Winkel δ zur Steigungsrichtung der Schraube 48 bildet, der kleiner ist als 90°. Damit entspricht also die Darstellung in Figur 14 den Gestaltungen der Schrauben gemäß der Figuren 11 bis 13. Diese Gestaltung hat, wie oben erläutert, zur Folge daß beim Eindrehen der Schraube 48 die Endfläche 36 Material auf die Rückflanke 49 des Gewindes 32 drängt, die der Lastflanke 44 gegenüberliegt.

Bei der Schraube 50 gemäß Figur 15 besitzt die Endfläche 36 eine andere Schräglage. Die Verbindungslinie der Basispunkte 37 und 38 (Grundlinie 63) der Endfläche 36 verläuft hier in einem Winkel δ zur Steigungsrichtung der Schraube 50, der größer ist als 90°. Beim Eindrehen der Schraube 50 drückt die Endfläche 36 das Material auf die Seite der Lastflanke 44.

Die in der Figur 16 dargestellte Schraube 52 mit dem Gewinde 32 und dem Schaft 33 endet, ähnlich wie die Schrauben gemäß den Figuren 11 bis 15, in einer Endfläche, die hier als wendelartige Fläche 53 gestaltet ist. Diese Endfläche 53 geht von der Gewindeflanke 54, die die Rückflanke des Gewindes 32 bildet, aus. Sie ist gebildet durch das flächige Abschneiden des Gewindes 32. Aufgrund dieses Abschneidens des Gewindes 32 bildet sich zwischen der Lastflanke 57 und der Endfläche 53 eine Schneidkante 58 aus, die in den Gewindescheitel 40 übergeht. Dieses Abschneiden beginnt an der Längskante 55, die sich über die Rückflanke 57 erstreckt. Im weiteren Verlauf geht die Endfläche 53 über eine ihr innewohnende Wendel in den Mantel des Schaftes 33 an der Stelle 56 über, wo sich bei gleichmäßigem Einlaufen der Endfläche 53 in den Mantel praktisch kein Absatz ergibt, so daß an der Stelle 56, die als Grundlinie der Endfläche 53 aufzufassen ist, auch keine Kante in die Figur 16 eingezeichnet ist. Die die Endfläche 53 auf ihrer einen Seite begrenzende Grundlinie 56 verläuft vom Ende der Längskante 55 in Richtung zum Ende der Schneidkante 58.

In der Figur 17 ist eine Schraube 61 dargestellt, die prinzipiell mit derjenigen gemäß den Figuren 11 bis 14 übereinstimmt. Es handelt sich dabei um eine Schraube mit einer Schräglage der Endfläche 62, die darauf zurückzuführen ist, daß die Grundlinie 64 in einem Winkel zur Steigungsrichtung verläuft, der kleiner ist als 90°. Charakteristisch für die Schraube 61 gemäß Figur 17 ist, daß sich die Endfläche 62 über eine relativ große Länge des betreffenden Gewindeganges erstreckt, nämlich über mehr als ein 1/4 eines vollen Gewindeganges. Damit ergibt sich eine relativ lange Schneidkante 65, die das Eindrehen der Schraube insbesondere in härteres Material erleichtert.

Außerdem liefert diese Gestaltung den Vorteil, daß der Herstellungsvorgang der Schraube, nämlich das Kaltwalzen, vereinfacht wird.

Sämtliche vorstehend beschriebenen Schrauben gemäß den Figuren 11 bis 17 sind hinsichtlich der Neigung der Endfläche so gestaltet, daß dabei der Scheitelpunkt der Endfläche (Punkt 39 in Figur 14) gegenüber der Grundlinie (Linie 63 in Figur 14) nacheilt, und zwar bezogen auf die Eindrehrichtung der Schraube. Diese Gestaltung ermöglicht es unter anderem, wie vorstehend dargelegt, die Endfläche besonders lang auszubilden.

In Figur 18 ist die Schraube 47 dargestellt, bei der die Schräglage der Endfläche so gewählt ist, daß der Scheitelpunkt 66 gegenüber der Grundlinie 67 (gestrichelt gezeichnet), voreilt. Das betreffende Ende des Gewindeganges bildet damit eine Art Hinterschneidung, bei der beim Eindrehen der Schraube 47 in ein Bauteil zunächst der Scheitelpunkt 66 auf das Material des Bauteils trifft. womit auch die Schneidkante 68 wirksam wird. Diese Gestaltung der Schraube 47 hat zur Folge, daß beim Eindrehen der Schraube in das Material eines Werkstückes die in radialer Richtung wirkenden Kraftvektoren geringer sind als im Falle der Gestaltung der Schraube gemäß Figuren 11 bis 17. Wenn es also bei der Verwendung der erfindungsgemäßen Schraube wesentlich darauf ankommt, daß diese beim Eindrehen das betreffende Werkstück in Radialrichtung besonders wenig belastet, so ist die Gestaltung der Schraube gemäß Figur 18 besonders vorteilhaft.

In Figur 19 ist die Schraube 69 dargestellt, bei der für die Schneidkante 71 ein andersartiger Verlauf als bei den vorher beschriebenen Ausführungsbeispielen gewählt ist. Die Schneidkante 71 verläuft nämlich gegenüber der Steigung des Gewindes 32 derart, daß sie dabei einer Abbiegung folgt, die unter Verkleinerung des Steigungswinkels des Gewindes 32 verläuft. Die Schneidkante 71 ist also gewissermaßen gegenüber der Richtung des Gewindescheitels 40 in Richtung zu einem nicht dargestellten Schraubenkopf hin abgeknickt. Neben der Schneidkante 71 sind die Endfläche 72 und der Lastflankenauslauf 73 ausgebildet, in den die Lastflanke 44 übergeht. Bei dieser Ausführungsform der Schraube 69 ergibt sich ein Verdrängen des von der Schneidkante 71 verdrängten Materials in Richtung zur Rückflanke 49.

Figur 20 zeigt eine Abwandlung der Ausführungsform gemäß Figur 19. Die Schraube 70 gemäß Figur 20 zeigt das Gewinde 32, dessen Gewindescheitel 40 in die Schneidkante 74 übergeht, die hier im Gegensatz zu der Schraube 69 gemäß Figur 19 eine derartige Abbiegung aufweist, daß die Schneidkante 74 unter Vergrößerung des Steigungswinkels des Gewindes 32 verläuft. Neben der Schneidkante 74 ist die Endfläche 75 und der Rückflankenauslauf 76 ausgebildet, in den die Rückflanke 49 übergeht. Bei der Ausführungsform gemäß Figur 20 wird das von der Schneidkante 74 verdrängte Material in Richtung auf die Lastflanke 44 verdrängt.

## Patentansprüche

1. Durch Kaltwalzen geformte Schraube zum Eindrehen in Kunststoff mit selbstfurchendem Gewinde, deren Gewindegänge (3) im Querschnitt etwa messerklingenartig mit einem äußeren Flankenwinkel (α) von etwa 30° gestaltet sind, **dadurch gekennzeichnet, dass** eine Flankenfläche (6,8; 11/13, 14/15; 17,18) der Gewindegänge (3) etwa im mittleren Drittel einen Knick (5,16) nach innen zu aufweist und einen an den äußeren Flankenwinkel (α) direkt anschließenden inneren Flankenwinkel (β) zwischen dem Knick (5,16) und dem Gewindegrund (7) bildet, wobei der innere Flankenwinkel (β) im Wesentlichen gleich oder größer ist als 1/3 des äußeren Flankenwinkels (α).

2. Schraube nach Anspruch 1, **dadurch gekennzeichnet, dass** der Knick (5) jeweils nur auf einer Flankenfläche (8) eines Gewindeganges (3) vorgesehen ist.

3. Schraube nach Anspruch 1, **dadurch gekennzeichnet, dass** der Knick (5,16) jeweils auf beiden Flankenflächen (11/13, 14/15) eines Gewindeganges (3) vorgesehen ist.

4. Schraube nach einem der Ansprüche 1 bis 3, **dadurch gekennzeichnet, dass** der äußere Flankenwinkel (α) die Gewindegänge (3) in deren Axialschnitt symmetrisch oder unsymmetrisch begrenzt.

5. Schraube nach einem der Ansprüche 1 bis 4, **dadurch gekennzeichnet, daß** die Flankenflächen (11,14) im Bereich des inneren Flankenwinkels (β) im Axialschnitt geradlinig verlaufen.

6. Schraube nach einem der Ansprüche 1 bis 4, **dadurch gekennzeichnet, daß** die Flankenflächen (19; 20,21) im Bereich des inneren Flankenwinkels (β) vom Knick (5,16) ab konkav gewölbt verlaufen.

7. Schraube nach einem der Ansprüche 1 bis 6, **dadurch gekennzeichnet, daß** der innere Flankenwinkel (β) die Gewindegänge (3) in deren Axialschnitt symmetrisch oder unsymmetrisch begrenzt.

8. Schraube nach einem der Ansprüche 1 bis 7, **dadurch gekennzeichnet, daß** die Flankenflächen (11, 14; 17,18) im Bereich des Gewindefußes unter Vergrößerung des inneren Flankenwinkels (β) in den Gewindegrund (7) als Verbreiterung (22,23; 24,25) des Gewindefußes übergehen.

9. Schraube nach Anspruch 8, **dadurch gekennzeichnet, daß** die Verbreiterung (22,23; 24,25) einen gegenüber dem äußeren Flankenwinkel (α) im Mittel größeren Flankenwinkel bildet.

10. Schraube nach Anspruch 8 oder 9, **dadurch gekennzeichnet, daß** die Verbreiterung (22,23) im Axialschnitt geradlinig verläuft.

11. Schraube nach Anspruch 8 oder 9, **dadurch gekennzeichnet, daß** die Verbreiterung (24,25) im Axialschnitt konkav gewölbt verläuft.

12. Schraube nach einem der Ansprüche 1 bis 11, **dadurch gekennzeichnet, daß** die Flankenflächen (11/13; 14/15) der Gewindegänge (3) etwa in der Mitte den Knick (5,16) nach innen zu aufweisen.

13. Schraube nach einem der Ansprüche 1 bis 12, **dadurch gekennzeichnet, daß** sich der bzw. die Gewindegänge (3) mit dem Knick (5,16) sich nur über einen Teil des Gewindes der Schraube erstrecken.

14. Durch Kaltwalzen geformte Schraube (31,47,48,50,52,61,69,70) mit selbstfurchendem Gewinde (32), das vor dem Ende ihres Schaftes (33) derart endet, daß das freie Schaftende (34) eine Führung für das Eindrehen der Schraube (31,47,48,50,52,61,69,70) in eine Bohrung (41) bildet, nach einem der Ansprüche 1 bis 13, **dadurch gekennzeichnet, daß** das Gewindeende durch eine seinen Gewindegang (32) abschneidende und schräg zum Querschnitt der Schraube (31,47,48,50,52,61,69,70) gerichtete Endfläche (36,45,46,53,62,72,75) mit einer Schneidkante (43,58,65,68,71,74) und mit einer Grundlinie (56,63,64,67) gebildet ist, die die zwischen der einen Gewindeflanke (49,54) und dem Mantel des Schaftes (33) bestehende Gewindefußkante (60) fortsetzt, wobei die Grundlinie (56,63,64,67) in einem von 90° wesentlich abweichenden Winkel δ zur Steigungsrichtung (Steigungswinkel γ des Gewindes (32) verläuft und die Schneidkante (43,58,65,68,71,74) in den Gewindescheitel (40) übergeht.

15. Schraube nach Anspruch 14, **dadurch gekennzeichnet, daß** die Endfläche (36) im wesentlichen als Dreieck gestaltet ist, dessen zwischen seinen Basispunkten (37,38) verlaufende Basis von der Grundlinie (63) gebildet ist und dessen Scheitelpunkt (39) mit dem Gewindescheitel (40) zusammenfällt.

16. Schraube nach Anspruch 15, **dadurch gekennzeichnet, daß** die Schräglage der Endfläche so gewählt ist, daß der Scheitelpunkt gegenüber der Grundlinie in Eindrehrichtung nacheilt.

17. Schraube nach Anspruch 15, **dadurch gekennzeichnet, daß** die Schräglage der Endfläche so gewählt ist, daß der Scheitelpunkt gegenüber der Grundlinie in Eindrehrichtung voreilt.

18. Schraube nach einem der Ansprüche 14 bis 17, **dadurch gekennzeichnet, daß** die Endfläche (36) eben ist.

19. Schraube nach einem der Ansprüche 14 bis 17, **dadurch gekennzeichnet, daß** die Endfläche (45,46) gewölbt ist.

20. Schraube nach einem der Ansprüche 14 bis 19, **dadurch gekennzeichnet, daß** die Endfläche (53) in wendelartiger Gestaltung von der einen Gewindeflanke (54) ausgeht und flach in den Mantel des Schaftes (33) verläuft.

21. Schraube nach einem der Ansprüche 14 bis 20, **dadurch gekennzeichnet, daß** die Endfläche (62) sich mindestens über 1/4 eines Gewindeganges erstreckt.

22. Schraube nach einem der Ansprüche 14 bis 21, **dadurch gekennzeichnet, daß** die Grundlinie (37,38) in einem Winkel δ verläuft, der kleiner ist als 90°.

23. Schraube nach einem der Ansprüche 14 bis 21, **dadurch gekennzeichnet, daß** die Grundlinie (37,38) in einem Winkel δ verläuft, der größer ist als 90°.

24. Schraube nach einem der Ansprüche 14 bis 23, **dadurch gekennzeichnet, daß** die Endfläche (72,75) derart ausgebildet ist, daß die von ihr gebildete Schneidkante (71,74) gegenüber der Steigung des Gewindes (32) eine Abbiegung aufweist.

25. Schraube nach Anspruch 24, **dadurch gekennzeichnet, daß** die Abbiegung unter Verkleinerung des Steigungswinkels verläuft (Fig. 19).

26. Schraube nach Anspruch 24, **dadurch gekennzeichnet, daß** die Abbiegung unter Vergrößerung des Steigungswinkels verläuft (Fig.20).

## Claims

1. Screw shaped by cold rolling, for screwing into plastic material and having a self-tapping thread, whose thread fillets (3) viewed in cross-section are shaped like knife blades with an outer flank angle (α) of approximately 30°,
**characterised in that**
a flank surface (6, 8; 11/13, 14/15; 17, 18) of the thread fillets (3) features an inward curve (5, 16) approximately in its central third and an inner flank angle (β) immediately following the outer flank angle (α) between the curve (5, 16) and the thread root (7), such that the inner flank angle (β) is essentially equal to or larger than one-third of the outer flank angle (α).

2. Screw according to Claim 1,
**characterised in that**
in each case the curve (5) is provided only on one flank surface (8) of the thread fillet (3).

3. Screw according to Claim 1,
**characterised in that**
in each case the curve (5, 16) is provided on both flank surfaces (11/13), 14/15) of a thread fillet (3).

4. Screw according to any of Claims 1 to 3,
**characterised in that**
the outer flank angle (α) delimits the thread fillets (3) in their axial cross-section symmetrically or unsymmetrically.

5. Screw according to any of Claims 1 to 4,
**characterised in that**
in the area of the inner flank angle (β) the flank surfaces (11, 14) are straight when viewed in axial cross-section.

6. Screw according to any of Claims 1 to 4,
**characterised in that**
in the area of the inner flank angle (β) the flank surfaces (19; 20, 21) are concavely arched from the curve (5, 16) onwards.

7. Screw according to any of Claims 1 to 6,
**characterised in that**
the inner flank angle (β) delimits the thread fillets (3) in their axial cross-section symmetrically or unsymmetrically.

8. Screw according to any of Claims 1 to 7,
**characterised in that**
in the area of the thread root, the flank surfaces (11, 14; 17, 18) merge by enlargement of the inner flank angle (β) into the thread root (7) forming a wider portion (22, 23; 24, 25) of the thread root.

9. Screw according to Claim 8,
**characterised in that**
the wider portion (22, 23; 24, 25) forms a flank angle on average larger than the outer flank angle (α).

10. Screw according to Claims 8 or 9,
**characterised in that**
viewed in axial cross-section, the wider portion (22, 23) is straight.

11. Screw according to Claims 8 or 9,
**characterised in that**
viewed in axial cross-section, the wider portion (24, 25) is concavely arched.

12. Screw according to any of Claims 1 to 11,
**characterised in that**
the flank surfaces (11/13; 14/15) of the thread fillets (3) have the inward curve (5, 16) approximately in the middle.

13. Screw according to any of Claims 1 to 12,
**characterised in that**
the thread fillet or fillets (3) having the curve (5, 16) extend only over part of the thread of the screw.

14. Screw (31, 47, 48, 50, 52, 61, 69, 70) shaped by cold rolling, with a self-tapping thread (32), which ends before the end of the screw shaft (33) such that the free end (34) of the shaft forms a guide for the screwing of the screw (31, 47, 48, 50, 52, 61, 69, 70) into a hole (41), according to any of Claims 1 to 13,
**characterised in that**
the end of the thread is formed by an end surface (36, 45, 46, 53, 62, 72, 75) with a cutting edge (43, 58, 65, 68, 71, 74) to cut its thread pitch (32), the said end surface being directed obliquely relative to the cross-section of the screw (31, 47, 48, 50, 52, 61, 69, 70) and having a baseline (56, 63, 64, 67) that extends the thread root edge (60) existing between one of the thread flanks (49, 54) and the outer surface of the shaft (33), such that the said baseline (56, 63, 64, 67) extends at an angle δ substantially different from 90° relative to the pitch spiral direction (the pitch angle γ of the thread (32)) and the cutting edge (43, 58, 65, 68, 71, 74) merges into the apex (40) of the thread.

15. Screw according to Claim 14,
**characterised in that**
the end surface (36) is essentially triangular, with its base between the base points (37, 38) formed by the baseline (63) and its apex point (39) coincident with the thread apex (40).

16. Screw according to Claim 15,
**characterised in that**
the oblique position of the end surface is chosen such that the apex point lags behind the baseline in the screwing-in direction.

17. Screw according to Claim 15,
**characterised in that**
the oblique position of the end surface is chosen such that the apex point leads the baseline in the screwing-in direction.

18. Screw according to any of Claims 14 to 17,
**characterised in that**
the end surface (36) is flat.

19. Screw according to any of Claims 14 to 17,
**characterised in that**
the end surface (45, 46) is arched.

20. Screw according to any of Claims 14 to 19,
**characterised in that**
the end surface (53) extends in spiral shape starting from one thread flank (54) and merges flatly into the outer surface of the shaft (33).

21. Screw according to any of Claims 14 to 20,
**characterised in that**
the end surface (62) extends over at least one-quarter of a thread pitch.

22. Screw according to any of Claims 14 to 21,
**characterised in that**
the baseline (37, 38) extends at an angle δ smaller than 90°.

23. Screw according to any of Claims 14 to 21,
**characterised in that**
the baseline (37, 38) extends at an angle δ greater than 90°.

24. Screw according to any of Claims 14 to 23,
**characterised in that**
the end surface (72, 75) is shaped such that the cutting edge (71, 74) which it forms is inclined at an angle relative to the thread pitch.(32).

25. Screw according to Claim 24,
**characterised in that**
the inclination is smaller than the pitch angle. (fig. 19)

26. Screw according to Claim 24,
**characterised in that**
the inclination is larger than the pitch angle (fig. 20)

## Revendications

1. Vis formée par laminage à froid destinée à être vissée dans une matière plastique et comportant un filetage autotaraudeur, dont les filets (3) sont agencés en coupe transversale approximativement sous la forme d'une lame de couteau avec un angle de flanc extérieur (α) égal à environ 30°, **caractérisée en ce qu'**une surface de flanc (6, 8; 11/13, 14/15; 17, 18) des filets (3) possède, approximativement dans le tiers central, un coude (5, 16) dirigé vers l'intérieur, et forme un angle de flanc intérieur (β), qui se raccorde directement à l'angle de flanc extérieur (α), entre le coude (5, 16) et le fond (7) du filetage, l'angle de flanc intérieur (β) étant essentiellement égal ou supérieur à 1/3 de l'angle de flanc extérieur (α).

2. Vis selon la revendication 1, **caractérisée en ce que** le coude (5) est prévu respectivement uniquement sur une surface de flanc (8) d'un filet (3) du filetage.

3. Vis selon la revendication 1, **caractérisée en ce que** le coude (5, 6) est prévu respectivement sur les deux surfaces de flanc (11/13, 14/15) d'un filet (3) du filetage.

4. Vis selon l'une des revendications 1 à 3, **caractérisée en ce que** l'angle de flanc extérieur (α) limite d'une manière symétrique ou dissymétrique les filets (3) du filetage, dans leur coupe axiale

5. Vis selon l'une des revendications 1 à 4, **caractérisée en ce que** les surfaces de flanc (11, 14) s'étendent selon une disposition rectiligne en coupe axiale dans la zone de l'angle de flanc inférieur (β).

6. Vis selon l'une des revendications 1 à 4, **caractérisée en ce que** les surfaces de flanc (19; 20, 21) ont une forme cintrée concave à partir du coude (5, 16) dans la zone de l'angle de flanc intérieur (β).

7. Vis selon l'une des revendications 1 à 6, **caractérisée en ce que** l'angle de flanc intérieur (β) limite les filets (3) du filetage d'une manière symétrique ou dissymétrique dans leur coupe axiale.

8. Vis selon l'une des revendications 1 à 7, **caractérisée en ce que** dans la zone de la base du filetage, les surfaces de flanc (11, 14; 17, 18) se prolongent, moyennant un accroissement de l'angle de flanc intérieur (β), dans le fond (7) du filetage sous la forme d'un élargissement (22, 23, 24, 25) du pied du filetage.

9. Vis selon la revendication 8, **caractérisée en ce que** l'élargissement (22, 23; 24, 25) forme un angle de flanc qui est supérieur en moyenne à l'angle de flanc extérieur (α).

10. Vis selon la revendication 8 ou 9, **caractérisée en ce que** l'élargissement (22, 23) s'étend avec une forme rectiligne en coupe axiale.

11. Vis selon la revendication 8 ou 9, **caractérisée en ce que** l'élargissement (24, 25) s'étend avec une forme cintrée concave en coupe axiale.

12. Vis selon l'une des revendications 1 à 11, **caractérisée en ce que** les surfaces de flanc (11/13; 14/15) des filets (3) du filetage possèdent, approximativement au centre, le coude (5, 16) dirigé vers l'intérieur.

13. Vis selon l'une des revendications 1 à 12, **caractérisée en ce que** le ou les filets (3) du filetage pourvus du coude (5, 16) s'étendent seulement sur une partie du filetage de la vis.

14. Vis (31, 47, 48, 50, 52, 61, 69, 70) formée par laminage à froid comportant un filetage autotaraudeur (32), qui se termine en deçà de l'extrémité de la tige de vis (33) de telle sorte que l'extrémité libre (34) de la tige forme un guide pour le vissage de la vis (31, 47, 48, 50, 52, 61, 69, 70) dans un perçage (41), selon l'une des revendications 1 à 13, **caractérisée en ce que** l'extrémité du filetage est formée par une surface d'extrémité (36, 45, 46, 53, 62, 72, 75) qui recoupe le filet (32) de l'extrémité du filetage et est dirigée obliquement par rapport à la section transversale de la vis (31, 47, 48, 50, 52, 61, 69, 70) et comporte avec une arête de coupe (43, 58, 65, 68, 71, 74) et avec une ligne de fond (56, 63, 64, 67), qui prolonge le bord du pied de filetage (60) qui existe entre un flanc (49, 54) du filetage et l'enveloppe de la tige (33), la ligne de fond (56, 63,64, 67) s'étendant en faisant un angle δ, qui diffère nettement de 90°, par rapport à la direction de montée (angle de pas y du filetage (32), et l'arête de coupe (43,58, 65, 68, 71, 74) prolongeant le sommet (40) du filetage.

15. Vis selon la revendication 14, **caractérisée en ce que** la surface d'extrémité (36) est agencée essentiellement sous la forme d'un triangle, dont la base, qui s'étend entre les points de base (37, 38) du triangle, est formée par la ligne de fond (63) et dont le sommet (39) coïncide avec le sommet (40) du filetage.

16. Vis selon la revendication 15, **caractérisée en ce que** la position oblique de la surface d'extrémité est choisie de telle sorte que le sommet se situe en arrière par rapport à la ligne de base dans la direction de vissage.

17. Vis selon la revendication 15, **caractérisée en ce que** la position oblique de la surface d'extrémité est choisie de telle sorte que le sommet se situe en avant de la ligne de base dans le sens de vissage.

18. Vis selon l'une des revendications 14 à 17, **caractérisée en ce que** la surface d'extrémité (36) est plane.

19. Vis selon l'une des revendications 14 à 17, **caractérisée en ce que** la surface d'extrémité (45, 46) est cintrée.

20. Vis selon l'une des revendications 14 à 19, **caractérisée en ce que** la surface d'extrémité (53) s'étend avec une configuration de forme hélicoïdale à partir d'un flanc (54) du filetage et s'étend à plat dans l'enveloppe de la tige (33).

21. Vis selon l'une des revendications 14 à 20, **caractérisée en ce que** la surface d'extrémité (62) s'étend au moins sur un 1/4 du filet du filetage.

22. Vis selon l'une des revendications 14 à 21, **caractérisée en ce que** la ligne de fond (37, 38) s'étend sous un angle δ qui est inférieur à 90°.

23. Vis selon l'une des revendications 14 à 21, **caractérisée en ce que** la ligne de fond (37, 38) s'étend sous un angle δ qui est supérieur à 90°.

24. Vis selon l'une des revendications 14 à 23, **caractérisée en ce que** la surface d'extrémité (72, 75) est agencée de telle sorte que l'arête de coupe (71, 74) formée par la face d'extrémité, présente un coude par rapport à la pente du filetage (32).

25. Vis selon la revendication 24, **caractérisée en ce que** le coude est disposé avec une réduction de l'angle d'inclinaison (figure 19).

26. Vis selon la revendication 24, **caractérisée en ce que** le coude est disposé de manière à augmenter moyennant un accroissement de l'angle d'inclinaison (figure 20).
